# EUROPEAN PATENT SPECIFICATION

(11) **EP 1 299 982 B1**
(45) Date of publication and mention of the grant of the patent: **22.05.2013**
(21) Application number: 00969357.3
(22) Date of filing: 29.09.2000
(51) Int. Cl.: H04L 29/06, H04L 12/28, H04L 29/12

(54) **OPIMIZATION OF SERVICE ACCESS**
OPTIMIERUNG EINES DIENSTZUGRIFFS
OPTIMISATION D'ACCES A DES SERVICES

(30) Priority: 30.06.2000 EP 00006114
(43) Date of publication of application: 09.04.2003
(73) Proprietor: Nokia Corporation, 02150 Espoo (FI)
(72) Inventor: RÄSÄNEN, Juha, FIN-02660 Espoo (FI); LINDFORS, Juha, FIN-01640 Vantaa (FI); OHVO, Mikko, FIN-04660 Numminen (FI); PEISALO, Jorma, FIN-01620 Vantaa (FI); NIEMI, Juhapekka, Coppel, TX 75019 (US); MIKKONEN, Tommi, FIN-33400 Tampere (FI)
(74) Representative: Style, Kelda Camilla Karen
(86) International application number: PCT/EP2000/009581
(87) International publication number: WO 2002/003649

(56) References cited:
- WO-A-00/19677
- WO-A-96/20448
- WO-A-98/59460
- WO-A-99/16227
- WO-A-99/28827
- US-A- 5 093 794
- US-A- 6 084 874
- PRASHANT CHANDRA, ALLAN FISHER, COREY KOSAK, PETER STEENKISTE: "Network Support for Application Orientated QoS" IWQOS 98, SIXTH INTERNATIONAL WORKSHOP ON QUALITY OF SERVICE, [Online] 18 - 20 May 1998, pages 187-195, XP002169809 IEEE catalog: 98EX136 ISBN: 0-7803-4482-0 Retrieved from the Internet: <URL:http://www.ieee.org> [retrieved on 2001-06-15]

## Description

The present invention relates to a method of optimizing a service access in a communication connection. Further, the present invention relates to a service broker in a communication system for optimizing a service access in a communication system.

In the present specification, under the term "service" there should everything be understood which is defined by certain performance features being provided by the infrastructure of a communication system. That shall not only be such performance features which are necessary, but also those which are optional, and the performance features may be provided time-dependent or case-dependent.

Many of the efforts made in recent years in the field of communication (e.g. 2^{nd} and 3^{rd} generation of mobile telecommunication, advancements in the use of the Internet) aim to enable communication between any device which is able to communicate. That is, some kind of compatibility shall be present between communication terminals such as personal computers, mobile phones, image transmitting phones and the like, at least in principle.

As a first aspect, a compatibility between devices can however only be present for like or at least similar kinds of data, i.e. for speech data, video data, email and so on, for example. To be precise, a definition for compatibility might only be possible for each kind of data separately.

As a result, the communication possibilities between communication terminals are dependent from the kind of data to be exchanged. Namely, there arises the problem which terminal is able to receive (i.e. to process) which kind of data. In fact, communication networks are at present defined and divided from each other in view of this aspect. However, the communication technology progresses forward to a more indistinct status, enabling to transmit whatever data across the networks.

For such a free exchange of data, the different networks itself are to be networked. This networking requires a unique standard for the data exchange which, needless to say, is the Internet Protocol (IP). This means that the exchange of data of whatever kind can be easily realized over the Internet. However, this is only an example, but an already realized one.

Furthermore, while having different networks but a unique data exchange standard then, when thinking of mobile communication terminals such as portable computers, mobile phones, and the like, these devices shall be able to access to at least most of the networks, regardless of their abilities to process certain kinds of data.

Anyway, the sake of communication is rather a question of who communicates with whom and the answer to how the communication is done should serve this sake. Namely, there is at least one user or subscriber behind each originated communication as well as behind each terminated communication. Accordingly, an originated communication has at least one certain destination which might rather be a user or subscriber than a device, although this might also be possible.

To reach a user/subscriber in the Internet, she or he may have at least one logical address, and the logical address may correspond to at least one of possible physical addresses. Thus, in order to find out which physical address is related to which logical address for a communication originating user/subscriber, there is known a device called Domain Name Server (DNS).

Apart from that, a second aspect of the above mentioned compatibility question concerns the way how the data is transmitted. That is, when thinking of the present and even more of the upcoming multimedia-situations in the field of communication, for instance a plurality of protocols will be present according to the items to be networked.

At present, it is up to the user to select the protocol for a communication connection, or better: for the legs of a communication connection, since the protocols of the different legs of such a communication connection might in future situations be more and more different from each other. To be precise, a communication connection will make use of a certain number of services which are provided by service devices to which a user may access. This means that a switching device of a network to which the current terminal of a user is attached is connected to those of these access service devices of which this user desires to use their provided service. Hence, such a communication connection includes a certain number of legs, or stated in other words, this is a multi-leg communication connection.

As mentioned above, each of these legs corresponds to a certain protocol for the data flow, and these protocols may differ from each other. However, a user is presently most likely not aware which protocols are available and which are suited or better suited for a certain communication connection.

Document WO 98/59460 discloses an information transfer system with dynamic distribution of data, control and management of information. Specifically, a method and a system for dynamically distributing information across a network is provided.

Furthermore, document WO 0019677 discloses methods and systems for a distributed scalable hardware independent system that supports multiple functions regarding management and support of communications over a packet-based network. The communications supported by these methods and systems include, but are not limited to, Voice Over Internet Protocol ("VOIP"), voice over Asynchronous Transfer Mode ("ATM"), video conferencing, data transfer, telephony, and downloading video or other data. These methods and systems use a call agent, which is composed of various objects distributed along a CORBA software bus, for exercising call management over two endpoints communicating over a packet-based network.

Moreover, document WO 9928827 relates generally to telecommunications, and more specifically, to a system and method of managing telecommunication connections. In telephony, the set up, maintenance and tear down of communications is implemented in a very inflexible and predetermined manner which impedes the addition of new features. The Internet is generally used as a simple transport network that is insensitive to performance requirements and therefore is a hindrance to high bandwidth services. The invention provides a system for managing connections which employs a proxy for each entity in the communication including each user and each telecommunication network. This allows a communication to be established with consideration for the resources available to each entity, in their respective limitations. This allows new services to be implemented over multiple networks, with the assurance that the necessary bandwidth and other resources will be available.

Still further, document WO 96/20448 discloses a flexible network platform and call processing system. The call processing system includes a particular call processing architecture and a resource managing system. An OAM & P subsystem and systems for performing data provisioning and service creation are each provided. The call processing system may include a call processing mechanism for performing call processing in accordance with defined service logic, and call processing resources connected to the call processing mechanism. The call processing resources are designed so that any service logic unit may be linked to any particular event that might occur in connection with the call processing system. A resource managing system is also disclosed for assigning resources in response to a request made by the call processing system for a specified capability. The resource managing system receives the request for a specified capability and allocates a logical resource object that identifies a particular resource that will support the specified resource capability.

It is an object of the present invention to provide an optimization for a service access in a communication connection within a communication system.

According to the present invention, this object is solved by providing a service broker functionality in the network system within which the communication connection takes place. This service broker functionality gains all information necessary for best configuring a communication connection, particularly a multi-leg communication connection. Specifically, the object is solved what is set forth in the appended independent claims. Advantageous modifications are set forth in the appended dependent claims. The information referred to above may concern the current operation environment of a terminal presently used by a user with which the data exchange possibilities of said user can be defined. Accordingly, these data exchange possibilities of the user may be restricted by the technical limitations of the currently used terminal and/or a certain configuration of said currently used terminal, both in dependency of corresponding performance capacities of the network to which said terminal is attached to. In case said user is with more than one terminal attached to one or more networks within said communication system, correspondingly more information is gained by and present in said service broker functionality. From the above, it is apparent that this part of the information in the service broker functionality will be handled most dynamically, that is, it will be updated again and again.

The above mentioned information gained by said service broker functionality also concerns the access to the services available for said user within said communication system. Since the access service devices are not so often reconfigured, the respective information gained by and present in said services broker functionality can be considered to be of a more static nature when compared to the above described user related information. One can say that the access to a service device, provided the respective service is available, is a question of the transmission of the service, that is how the service is transported. It is the parameters of the transmission of a service according to an access service device which are gained by and present in said service broker functionality, including the possibility that a service may not be limited to only one way of being transmitted.

It is remarked that the terms "data exchange possibilities" and "transmission parameters" are chosen according to the above described distinguishing definitions. However, the information corresponding to both terms may relate to either an identical, or a partly identical, or a fully different content.

With the gained information of the above described kind, the service broker functionality defines the legs of a communication connection, i.e. between a currently network-attached terminal of a user and the corresponding switching device as well as between respective access service devices and said switching device. Further, other access service devices within said communication system, but outside the network to which said terminal is currently attached to, may be concerned as well, since they may be available for an access by the user. This means that also to them communication connection legs are defined.

There are different possibilities how this service broker functionality can be applied. Apparently, a user may originate a communication connection to a certain destination or a communication connection may be terminated to said user. Therein, usual setups are run by the terminals, while the concerned switching device(s) establishes all legs of this communication connection by utilizing the information present in the service broker functionality, i.e. by applying the definitions for the legs. However, it is of course possible that the information being present in the service broker functionality is simply requested by any entity within the communication system. The reason may e.g. be that another user wants to know beforehand which kind of data can be submitted to said user at present and how fast such a transmission will be. Preferred embodiments of the present invention are described herein below in detail by way of example with reference to the accompanying drawings, in which
Fig. 1 shows a flow chart for illustrating the method according to the present invention;
Fig. 2 shows an example of a service broker functionality on network level in accordance with the present invention;
and
Fig. 3 illustrates a layered approach by the example of the internet protocol (IP) stack in accordance with the present invention.

From the following description of the preferred embodiments, the above mentioned and further solutions of the object underlying the present invention will become apparent in connection with their features and advantages.

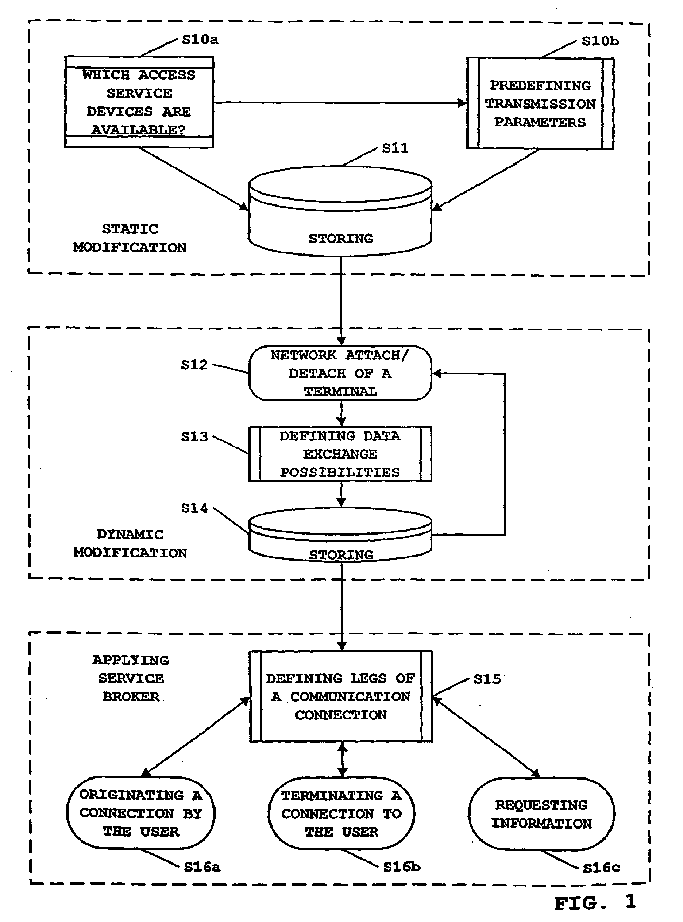

Fig. 1 shows the method according to the present invention with which a service access in a communication connection within a communication system can be optimized. Therein, switching devices of networks of said communication system are able to retrieve information from a service broker. Service broker means a functionality with which an optimized access to services is possible. As is shown in Fig. 1, the method utilizing this service broker comprises the following steps:

In a first phase, information of a rather static nature is established and/or modified in the service broker. Static means that the information can be considered as being fixed. In detail, in a step S10a it is determined which access service devices are available for a communication connection in said communication system. This availability may also be called "which services are offered?", since the number of available services may be reduced as will be set forth below. The available access service devices are simply present in said communication system. Thus, their transmission parameters, i.e. for example the utilized protocol and the data transmission rate, are fixed and do not change anymore unless a corresponding service is re-implemented up to a certain amount.

However, one access service device may provide more than only one set of parameters for transmission. For example, a service may be provided with the possibility of accessing to it with different data rates. Further, it is also possible that a certain service may be provided by different access service devices, either with same sets of parameters or with different ones.

Anyhow, in a step S10b, the transmission parameters of the available access service devices are defined. As mentioned above, since the available access service devices and the defined transmission parameters related thereto are substantially not subject to change, the two steps S10a and S10b are closely connected with each other and can be considered to be of a same level, i.e. to be effected simultaneously. Then, the thus defined transmission parameters of the available access service devices are stored in a step S11 in the service broker. Due to the rather seldom changes, the modifications in this information in the service broker are rather static when compared to those to follow. As a consequence, it is reasoned to speak of a predefining of the transmission parameters in view of the dynamic change in other information in the service broker to be described herein below.

Upon a network attach of a terminal of a user or upon a call or connection setup in a step S12, information is submitted to the service broker with which the service broker can define the data exchange possibilities of said terminal in a step S13. According to the present invention, it is differentiated between the data exchange possibilities of the user her-/himself and of the terminal which she or he may have attached to a network. The data exchange possibilities of the user may be various due to more than one terminal being attached at one time to networks within a communication system. (It is to be noted that an attach/detach is not valid for circuit switched (CS) services but for packet switched (PS) services; instead, in the CS case, there is the call setup.)

Thus, when setting up a communication connection (or call) towards a terminal/user i.e. terminating a communication connection of a certain kind with respect to the transmitted data to the user, it may be only important to know whether the user is currently able to receive such kind of data, but not with which terminal he can receive this. Thus, what the service broker also defines are that there possibly are different legs for different kinds of data.

On the other hand, when the user originates a communication connection from a certain terminal, it is important to know the data exchange possibilities of exactly this originating terminal. With respect to one terminal, its data exchange possibilities may to the greatest extent depend on its overall equipment, however, also certain operation configurations of the terminal and its present environment are to be taken into account.

In the sense of the present invention it is to be noted that as far as the possibilities of a terminal to access to services is concerned, a case is not considered to be of relevance when these possibilities change while this terminal is online. This means that all those data exchange possibilities are submitted to upon the network attach or the call or connection setup which can be made use of during online operation of the terminal, although some of these possibilities might presently be not configured. Hence, the above mentioned certain operation configurations relate to configurations of a terminal which cannot be changed online such as certain supporting devices connected with the terminal and so on.

With respect to this item, it is further remarked that preferred data exchange possibilities of the user of the terminal or other tunings within the range of the data exchange possibilities of a terminal may be subject to the common setup negotiation of a communication connection. However, according to the present invention, the definition executed by the service broker device is of higher significance than the preferred requests of the user.

Step_S12 also corresponds to a change in the data exchange possibilities upon a detach of a terminal of a user. Thus, also in this case the data exchange possibilities are redefined in the subsequent step S13.

As matter of course, also all information related to the definition of data exchange possibilities are stored in the service broker in a step S14.

Since such network attaches and detaches or call or connection setups are considered to happen many times, also of a single user (e.g. due to roaming, or being online with different terminals either at the same time or subsequently), the stored information in the service broker changes dynamically due to such re-definitions. Thus, the steps S12 through S14 are looped.

The application of the service broker corresponds to the utilization of the stored information. To be precise, the legs of a communication connection (as far as predictable) are defined by the service broker in dependency of a certain event in a step S15. Then, this information can be provided for various purposes according to this event, typically for the origination S16a or the termination S16b of a communication connection by a corresponding joint action of the participating terminals, the service broker, and a corresponding switching device. Moreover, as event it is also conceivable that the information itself is requested S16c.

In any case, the switching device is involved for applying the information provided by the service broker. Such a switching device is adapted for such a use according to the present invention.

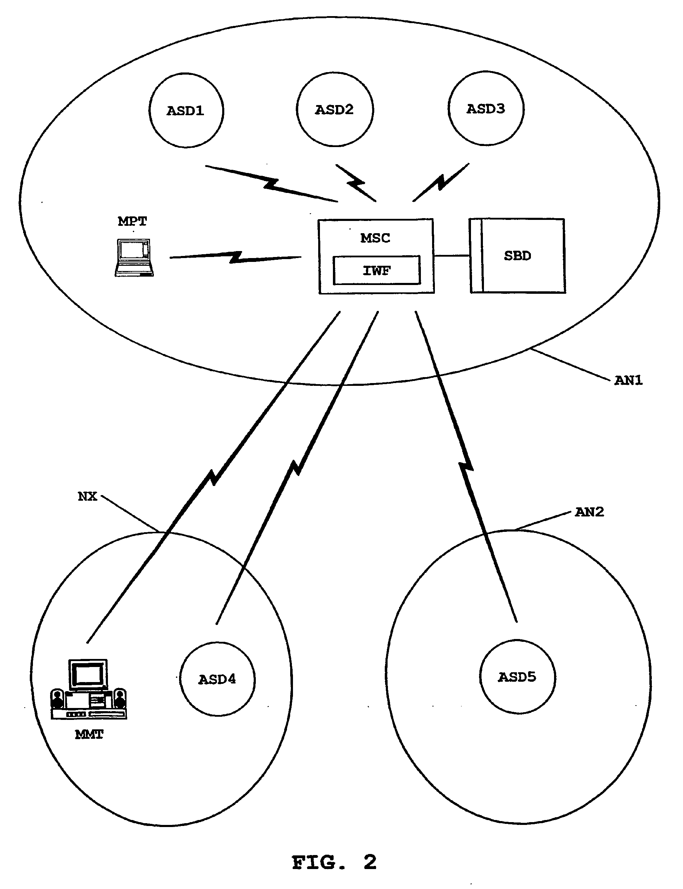

Referring to Fig. 2, there is shown an example of a service broker functionality on network level in accordance with the present invention. Specifically, there are access networks AN1 and AN2, and a further network NX which may also be a common access network, but does not need to be one. These networks AN1, AN2, NX are part of a communication system which may comprise even more networks. The interconnection of these networks may be of any kind, however, it is an embodiment of the present invention that the interconnection is present over the Internet Protocol IP. The network AN1 comprises a certain number of available access service devices ASD1, ASD2, ASD3 as well as a switching device MSC. For the sake of explanation, the part of the switching device which handles the interconnection with other networks shall be called interworking functionality IWF.

According to the present invention, the switching device is able to retrieve information from a service broker functionality SBD.

As mentioned above, this service broker functionality SBD may as one embodiment be present in centralized manner, that is, being implemented in one device. This device may be present in one of the networks AN1, AN2 of the communication system, maybe even be part of/implemented in the switching device MSC. Further, such a service broker device may also be present in or attached to the Internet.

The present invention is also not limited in a way that only one service broker functionality is present in a communication system, however, according to the present invention one functionality of this kind would suffice.

In case of the embodiment of a decentralized provision of the service broker functionality, i.e. a service broker system, respective means thereof can be located according to the above.

What is essential for the present invention is that regardless of how and where the service broker functionality is located, switching devices of networks of a communication system shall be able to retrieve information from this functionality.

As fig. 2 illustrates, the available access service devices are not limited to those ASD1, ASD2, ASD3 being present within the access network AN1, but also those ASD4, ASD5 within other networks AN2, NX of the communication system may be available, if there is an access to their services.

As a specific situation, a communication terminal MPT may be attached to one AN1 of the access networks, while another communication terminal MMT of any kind is present in a network NX. The network NX may be also of any kind, while all of the networks AN1, AN2 and NX are part of a communication system. The communication terminal MMT may be of any kind, as mentioned, and accordingly be able to use any kind of specific data.

The specific data is related to specific services, and for the sake of explanation, the communication terminal MMT may be a multimedia terminal, thus to assume this communication terminal MMT is able to deal with any kind of communication service.

According to the present invention, the user of the terminal MPT would attach the terminal MPT to the access network AN1, for example. Then, an update procedure is started with which the user submits to a service broker device SBD that she/he is currently in the access network AN1, using a certain terminal MPT, and (maybe accordingly) is able to use a certain amount of services. The data submitted by this update procedure shall not be limited to that but rather have the extent necessary to define a communication in question. If a part of this information changes, for example the access network is changed to network AN2 or the used terminal is changed, a further update procedure is executed.

Hence, at any time, the service broker device SBD is aware of information which is necessary to define a (service) communication with the user of the terminal MPT. Defining a (service) communication means here that the service broker device is able to provide information which services can currently be used by the user of terminal MPT, i.e. which kind of data can be processed/displayed by the current terminal of that user.

This is strongly supported by the predefinition of the transmission parameters of the available access service devices ASD1-ASD5.

To be precise, due to certain limited capabilities either of the terminal MPT or of the network AN1, some of the services offered (by an arbitrary functionality) may not work. Hence, the offering of these services or their use could be limited. This, however, is apparent to the service broker device.

In the following, examples are given which are directed to certain parts of the present invention to emphasize the respective aspects and their advantages. Further, possible implementations of the present invention are given so that it is clear how the invention can be carried out. The examples are chosen among items presently of interest. However, the present invention is believed to have further potential among future developments in the field of communication.

### Example 1: Network based service limitation

First a terminal of a user is connected to a fixed LAN (data rate: 100 Mbit/s), and all services are offered. Then, the user takes the terminal out of this fixed connection and walks around the office building (while being connected via Wireless LAN; data rate: 10 Mbit/s). The offered services are limited to a certain extent (not more than one simultaneous multimedia connection or a multimedia connection with a lower frame rate or a lower image quality). After that the user moves outside the building and changes to a 3G network (data rate: 1 Mbit/s). Therein, services are limited even more. Then the user moves to a rural region, where only a 2G network is in place. Thus, no multimedia connection is available. The point is that the terminal is the same, but the limitation results from the network.

### Example 2: Terminal based service limitation

A user has two terminals, one multimedia terminal and one 2G terminal. Thus, a caller can check which one is "on", and if only the 2G terminal is on, then the caller knows that he has to make an ordinary speech connection and does not "bother" the user with a multimedia call. In contrast thereto, if the multimedia terminal is "on", then the caller can choose which type of connection he wishes to establish.

With reference to fig. 2 means this that when the user of the terminal MMT wants to establish a call to the user of the terminal MPT, she/he would first make an inquiry to the service broker functionality SBD to achieve information where the user of the terminal MPT is (this might also be relevant to know which costs are caused by a call) and what kind of services she/he can currently use (e.g. mail, telephony, multimedia messaging and so on).

From the services being available to both terminals MPT and MMT, the user of the terminal MMT can now select one or more service. The corresponding call is of high precision and data is exchanged with high security.

What is of high significance for the establishing of such a call is that the definition of a communication connection between the terminals MPT and MMT of the respective users might be executed before this call is established, thereby providing the advantage that a suitable communication extent in view of the possible data exchange is selected.

Even more, the present invention also includes the possibility that the user of the terminal MMT executes his request to the service broker functionality from a terminal which is different from the terminal MMT.

### Example 3: Best Mode

What follows next is what is presently considered to be the best mode of carrying out the present' invention.

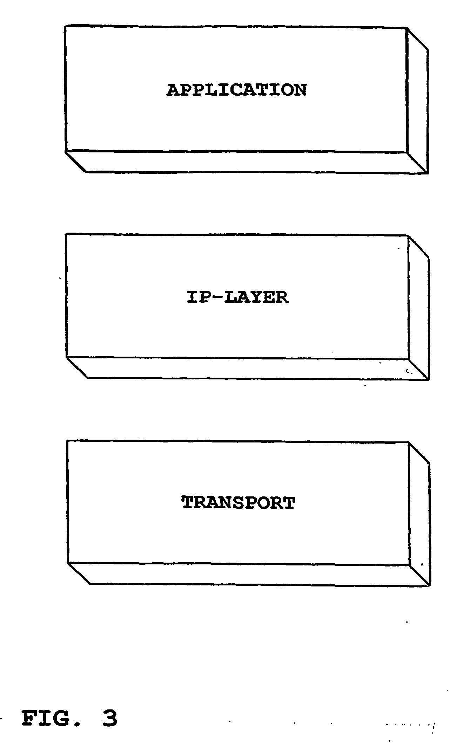

Referring now to Fig. 3, there is shown the internet protocol stack, which most likely becomes the dominant communication protocol. Thus, it is conceivable that the Internet Protocol (IP) runs over any transport media such as asynchronous transfer mode (ATM), time division multiplex (TDM), fiber and the like, and, in turn, that every media stream such as speech, video, or other kinds of data runs over the internet protocol.

Specifically, an application (see Fig. 3 top) is needed to allow the user to update hers/his user related information into the service broker functionality SBD when she/he attaches a terminal to some access network AN1, AN2. This application can be built on top of the transport control protocol (TCP) layer of the internet protocol stack. For example, this application might just access the predefined data structure of the service broker functionality SBD.

In addition, a kind of mechanism is necessary to provide the above mentioned inquiries to the service broker device. Here, an example may be to just inquire the device preferences, i.e. the above mentioned operation environment, that the user is currently using, which can be based in TCP/IP protocol suite while the data representation of the service broker functionality SBD can be based e.g. in the format of extended markup language (XML format).

### Example 4: extension of example 3

Further, the service broker functionality SBD can be attached to the domain name server (DNS) which provides logical address resolution for the user identity in the Internet (e.g. juhapekka.niemi@nokia.com or juhapekka.niemi.nokia.com). The data model of an address according to the domain name server, i.e. the mapping from logical to physical which is already implemented into the domain name server, needs to be complemented with the device capabilities data and other relevant information needed such as time-of-day, routing data and so on according to the above.

Example 5: Applicability in case of various bearer variations

The following case shall be considered: Some services are offered only through 3.1 kHz (= modem) access, some only through UDI/RDI (unrestricted digital information/restricted digital information = fully digital) access, some through both 3.1 kHz and UDI/RDI. UDI/RDI accesses may support e.g. the V.110 or V.120 protocol or both or some other protocol. Modem accesses may support all general modulation schemes or a limited set of schemes.

According to the present invention, the access to services available through various bearer variations is optimized (3.1 kHz, UDI/RDI, different transport protocols, different sets of available user rates, etc.). The user/terminal can use a common setup to destinations using different access parameters. An adaptation between the setup request and the capabilities of the target is done in an intermediate network element.

Hence, in a mobile environment, when in a non-transparent call separate legs of the connection differ from each other, i.e. have a different data rate, a different quality of service, etc., due to the flow control and buffering mechanisms used in a non-transparent connection, the operation of the method according to the present invention is largely advantageous:

In a mobile originated call (MOC), the mobile station firstly sends a setup (with a service definition and a destination number/identification) to the network (e.g. to the interworking functionality IWF of the switching device MSC). Then, the network negotiates the parameters with the mobile station if necessary (= standard procedure). Next, the network analyzes the destination number/identification and retrieves the predefined information from the service broker functionality corresponding to the destination. The network uses the predefined information, either as such or combined with the setup information from the mobile station, for setting up the leg between the network element (e.g. interworking functionality IWF of the switching device MSC) and the destination (e.g. an access service device beyond a fixed/ISDN/PSTN connection). After that, the network and the mobile station set up the leg of connection between each other using the results of the mutual setup negotiation.

On the other hand, in a mobile terminated call (MTC), the network (e.g. the interworking functionality IWF of the switching device MSC) receives a setup with a number/identification of the calling party, converts the setup parameters for the mobile network (if necessary) and sends the setup to the mobile station (= standard procedure). Then, the mobile station negotiates the parameters with the network if necessary (=standard procedure). Next, the network analyzes the calling party's number/identification and retrieves the predefined information corresponding to the number/identification from the service broker functionality. After that, the network uses the predefined information, either as such or combined with the setup information negotiated with the mobile station, for setting up the leg between the network element (e.g. the interworking functionality IWF of the switching device MSC) and the calling party (e.g. an access service device beyond a fixed/ISDN/PSTN connection). Finally, the network and the mobile station set up the leg of connection between each other using the results of the mutual setup negotiation.

An example of the above mentioned combined information would be the information transfer capability (ITC = e.g. UDI), user data rate (UR = e.g. 38.4 kbit/s) and protocol information (e.g. ITU-T V.110), which can be taken from the predefined destination specific information, and the transfer mode (synchronous/asynchronous) can be taken from the setup information. (The ITC, UR and protocol information in the setup can be for example "3.1 kHz audio", "28.8 kbit/s", "none").

Thus, the advantages are that the subscribers do not have to reconfigure their terminals before making a call to a destination that requires a different set of setup parameters than used by the previously made call. That is, they do not have to know anymore which protocols and parameter combinations are valid for each service access they want to use. This is very user friendly, since the prior art situation was insurmountable for many users, as indicated by operators of mobile communication networks.

Hence, a problem which the present invention overcomes is that currently many mobile terminals do not even support the configuration and signaling of all required parameters (e.g. ITC = UDI/RDI, RA = V.120) which means that call setups to certain destinations are not at all possible even though the transmission itself would be successful.

Further, there is no more need for the user to know details about the used bearer/connection, and no configuration/reconfiguration of the terminal is required by the user. Calls are successful also with terminals which are not supporting all required setup parameters, and for example the call setup times can be cut by approximately 15 s when the network can turn a 3.1 kHz (modem) setup to a UDI/RDI setup.

It should be understood that the above description and accompanying drawings are only intended to illustrate the present invention by way of example only. The preferred embodiments of the present invention may thus vary within the scope of the attached claims.

## Claims

1. A method, comprising:
retrieving service specific information by switching devices (MSC) of networks of a communication system which are operably connected for the performance of communication with at least one network node;
submitting information about a current operation environment of said at least one network node to a service broker entity which is configured to enable an optimized access to services;
defining (S13) data exchange possibilities of said at least one network node for said services by said service broker entity based on said information;
providing said data exchange possibilities for said services to a switching device upon a corresponding appropriate request; and
optimizing the service access by said service broker entity according to said data exchange possibilities and said request,
wherein said submitting information step is executed when said at least one network node is attached/detached to/from said communication system.

2. A method according to claim 1, further comprising a step of storing (S11) said data exchange possibilities for services as data being related to said at least one network node.

3. A method according to claim 1, wherein said at least one network node is a fixed part of said communication system.

4. A method according to claim 1, wherein said at least one network node is a part of a user terminal.

5. A method according to claim 1, wherein said submitting information step is executed when a connection setup is made by said at least one network element.

6. A method according to claim 1, wherein said appropriate request is made by a calling side.

7. A method according to claim 1, wherein in said optimizing step an appropriate data transfer mode is chosen.

8. A method according to claim 1, wherein in said optimizing step said communication connection is ended.

9. An apparatus, comprising:
means configured to provide a service broker functionality (SBD); means configured to receive information about a current operation environment of at least one network node when said at least one network node is attached/detached to/from a communication system;
means configured to define data exchange possibilities of said at least one network node for services based on said information; and
means configured to provide said data exchange possibilities for said services to a switching device upon a corresponding appropriate request.

10. An apparatus according to claim 9, wherein the apparatus is configured to use the Internet Protocol for interactions.

11. A service broker system, comprising:
means configured to receive information about a current operation environment of at least one network node when said at least one network node is attached/detached to/from a communication system;
means configured to define data exchange possibilities of said at least one network node for services based on said information; and
means configured to provide said data exchange possibilities for said services to a switching device upon a corresponding appropriate request.

12. An apparatus, comprising:
means configured to provide a switching functionality (MSC);
means configured to set up communication connections within and across networks in a communication system;
means configured to retrieve information enabling an optimized access to services; and
means configured to set up any legs of a communication connection, wherein
all legs of said communication connection can be set up differently according to said retrieved information.

13. An apparatus according to claim 12, further comprising an apparatus according to claim 9 or claim 10.

14. A communication network having terminals and comprising at least one apparatus (MSC) according to claim 12 or 13;
an apparatus (SBD) according to claim 9 or 10; and
at least one access service device (ASD1-ASD3).

15. A communication network having terminals and comprising at least one apparatus (MSC) according to claim 12 or 13;
a service broker system according to claim 11; and
at least one access service device.

16. A communication system comprising
a plurality of communication networks (AN1, AN2, NX), wherein a certain terminal (MPT) is configured to be attached to at least one communication network (AN1), and either of said plurality of communication networks (AN1, AN2, NX) is configured to have a communication connection with any of said communication networks, and access service devices (ASD1-ASD5) are configured to serve for said communication connection; and
an apparatus (SBD) according to claim 9 or 10.

17. A communication system comprising
a plurality of communication networks (AN1, AN2, NX), wherein a certain terminal (MPT) is configured to be attached to at least one communication network (AN1), and either of said plurality of communication networks (AN1, AN2, NX) is configured to have a communication connection with any of said communication networks, and access service devices (ASD1-ASD5) are available for said communication connection; and
a service broker (SBD) system according to claim 11.

## Patentansprüche

1. Verfahren, umfassend:
Abrufen von dienstspezifischen Informationen durch Vermittlungsvorrichtungen (MSC) von Netzwerken eines Kommunikationssystems, die betriebsfähig verbunden sind, um eine Kommunikation mit mindestens einem Netzwerkknoten durchzuführen;
Abschicken von Informationen über eine gegenwärtige Betriebsumgebung des mindestens einen Netzwerkknotens an eine Dienst-Broker-Einheit, die konfiguriert ist,
einen optimierten Zugriff auf Dienste zu ermöglichen;
Definieren (S 13) von Datenaustauschmöglichkeiten des mindestens einen Netzwerkknotens für die Dienste durch die Dienst-Broker-Einheit basierend auf den Informationen;
Bereitstellen der Datenaustauschmöglichkeiten für die Dienste für eine Vermittlungsvorrichtung auf eine entsprechende geeignete Anforderung hin; und
Optimieren des Dienstzugriffs durch die Dienst-Broker-Einheit gemäß den Datenaustauschmöglichkeiten und der Anforderung;
wobei der Schritt des Abschicken von Informationen ausgeführt wird, wenn der mindestens eine Netzwerkknoten an das/von dem Kommunikationssystem angeschlossen/getrennt wird.

2. Verfahren gemäß Anspruch 1, weiter umfassend einen Schritt des Speichern (S11) der Datenaustauschmöglichkeiten für Dienste als Daten, die sich auf den mindestens einen Netzwerkknoten beziehen.

3. Verfahren gemäß Anspruch 1, wobei der mindestens eine Netzwerkknoten ein fester Teil des Kommunikationssystems ist.

4. Verfahren gemäß Anspruch 1, wobei der mindestens eine Netzwerkknoten ein Teil eines Benutzerendgeräts ist.

5. Verfahren gemäß Anspruch 1, wobei der Schritt des Abschickens von Informationen ausgeführt wird, wenn ein Verbindungsaufbau von dem mindestens einen Netzwerkelement vorgenommen wird.

6. Verfahren gemäß Anspruch 1, wobei die geeignete geeignete Anforderung von einer Anruferseite vorgenommen wird.

7. Verfahren gemäß gemäß Anspruch 1, wobei bei dem Schritt des Optimierens ein geeigneter Datenübertragungsmodus ausgewählt wird.

8. Verfahren gemäß gemäß Anspruch 1, wobei bei dem Schritt des Optimierens die Kommunikationsverbindung beendet wird.

9. Gerät, umfassend:
Mittel, die konfiguriert sind, eine Dienst-Broker-Funktionalität (SBD) bereitzustellen;
Mittel, die konfiguriert sind, Informationen über eine gegenwärtige Betriebsumgebung mindestens eines Netzwerkknotens zu empfangen, wenn der mindestens eine Netzwerkknoten an ein/von einem Kommunikationssystem angeschlossen/getrennt wird;
Mittel, die konfiguriert sind, Datenaustauschmöglichkeiten des mindestens einen Netzwerkknotens für Dienste, basierend auf den Informationen zu definieren; und
Mittel, die konfiguriert sind, auf eine entsprechende geeignete Anforderung hin die Datenaustauschmöglichkeiten für die Dienste einer Vermittlungsvorrichtung bereitzustellen.

10. Gerät gemäß Anspruch 9, wobei das Gerät konfiguriert ist, um für Interaktionen das Internet-Protokoll zu verwenden.

11. Dienst-Broker-System, umfassend:
Mittel, die konfiguriert sind, Informationen über eine gegenwärtige Betriebsumgebung mindestens eines Netzwerkknotens zu empfangen, wenn der mindestens eine Netzwerkknoten an ein/von einem Kommunikationssystem angeschlossen/getrennt wird;
Mittel, die konfiguriert sind, Datenaustauschmöglichkeiten des mindestens einen Netzwerkknotens für Dienste basierend auf den Informationen zu definieren; und
Mittel, die konfiguriert sind, auf eine entsprechende geeignete Anforderung hin die Datenaustauschmöglichkeiten für die Dienste einer Vermittlungsvorrichtung bereitzustellen.

12. Gerät, umfassend:
Mittel, die konfiguriert sind, eine Vermittlungsfunktionalität (MSC) bereitzustellen;
Mittel, die konfiguriert sind, Kommunikationsverbindungen innerhalb von Netzwerken und über Netzwerke in einem Kommunikationssystem aufzubauen;
Mittel, die konfiguriert sind, Informationen abzurufen, die einen optimierten Zugriff auf Dienste ermöglichen; und
Mittel, die konfiguriert sind, Teilabschnitte einer Kommunikationsverbindung aufzubauen;
wobei alle Teilabschnitte der Kommunikationsverbindung, gemäß den abgerufenen Informationen, unterschiedlich aufgebaut werden können.

13. Gerät gemäß Anspruch 12, weiter umfassend ein Gerät gemäß Anspruch 9 oder 10.

14. Kommunikationsnetzwerk mit Endgeräten und umfassend
Netzwerkknoten ein fester Gerät (MSC) gemäß Anspruch 12 oder 13;
ein Gerät (SBD) gemäß Anspruch 9 oder 10; und
mindestens eine Zugriffsdienstvorrichtung (ASD1-ASD3).

15. Kommunikationsnetzwerk mit Endgeräten und umfassend
Netzwerkknoten ein fester Gerät (MSC) gemäß Anspruch 12 oder 13;
ein Dienst-Broker-System gemäß Anspruch 11; und
mindestens eine Zugriffsdienstvorrichtung.

16. Kommunikationssystem, umfassend:
mehrere Kommunikationsnetzwerke (AN1, AN2, NX), wobei ein bestimmtes Endgerät (MPT) konfiguriert ist, an mindestens ein Kommunikationsnetzwerk (AN1) angeschlossen zu werden; und
wobei jedes der mehreren Kommunikationsnetzwerke (AN1, AN2, NX) konfiguriert ist, eine Kommunikationsverbindung mit einem der Kommunikationsnetzwerke zu haben; und
wobei Zugriffsdienstvorrichtungen (ASD1-ASD5) konfiguriert sind, um für diese Kommunikationsverbindung zu dienen; und
ein Gerät (SBD) gemäß Anspruch 9 oder 10.

17. Kommunikationssystem, umfassend:
mehrere Kommunikationsnetzwerke (AN1, AN2, NX), wobei ein bestimmtes Endgerät (MPT) konfiguriert ist, an mindestens ein Kommunikationsnetzwerk (AN1) angeschlossen zu werden; und
wobei jedes der mehreren Kommunikationsnetzwerke (AN1, AN2, NX) konfiguriert ist, eine Kommunikationsverbindung mit einem der Kommunikationsnetzwerke zu haben; und
wobei Zugriffsdienstvorrichtungen (ASD1-ASD5) für diese Kommunikationsverbindung zur Verfügung stehen; und ein Dienst-Broker-System (SBD) gemäß gemäß Anspruch 11.

## Revendications

1. Procédé, comprenant :
la récupération d'informations spécifiques à des services par des dispositifs de commutation (MSC) de réseaux d'un système de communication, qui sont fonctionnellement connectés en vue de l'exécution d'une communication avec au moins un noeud de réseau ;
la transmission d'informations concernant un environnement d'exploitation en cours dudit au moins un noeud de réseau à une entité de courtier de services qui est configurée de manière à permettre un accès optimisé à des services ;
la définition (S13) de possibilités d'échange de données dudit au moins un noeud de réseau pour lesdits services, par ladite entité de courtier de services, sur la base desdites informations ;
la fourniture desdites possibilités d'échange de données pour lesdits services, à un dispositif de commutation, suite à une demande pertinente correspondante ; et
l'optimisation de l'accès aux services par ladite entité de courtier de services selon lesdites possibilités d'échange de données et ladite demandé ;
lequel ladite étape de transmission d'informations est exécutée lorsque ledit au moins un noeud de réseau est rattaché audit, ou détaché dudit système de communication.

2. Procédé selon la revendication 1, comprenant en outre une étape consistant à stocker (S11) lesdites possibilités d'échange de données pour des services, sous la forme de données connexes audit au moins un noeud de réseau.

3. Procédé selon la revendication 1, dans lequel ledit au moins un noeud de réseau est une partie fixe dudit système de communication.

4. Procédé selon la revendication 1, dans lequel ledit au moins un noeud de réseau est une partie d'un terminal d'utilisateur.

5. Procédé selon la revendication 1, dans lequel ladite étape de transmission d'informations est mise en oeuvre lorsqu'un établissement de connexion est exécuté ar ledit au moins un élément de réseau.

6. Procédé selon la revendication 1, dans lequel ladite demande pertinente est réalisée par un côté appelant.

7. Procédé selon la revendication 1, dans lequel, au cours de ladite étape d'optimisation, un mode de transfert de données pertinent est choisi.

8. Procédé selon la revendication 1, dans lequel, au cours de ladite étape d'optimisation, ladite connexion de communication est interrompue.

9. Dispositif comprenant :
un moyen configuré de manière à fournir une fonctionnalité de courtier de services (SBD) ;
un moyen configuré de manière à recevoir des informations concernant un environnement d'exploitation en cours d'au moins un noeud de réseau, lorsque ledit au moins un noeud de réseau est rattaché à, ou détaché d'un système de communication ;
un moyen configuré de manière à définir des possibilités d'échange de données dudit au moins un noeud de réseau de services, sur la base desdites desdites informations ; et
un moyen configuré de manière à fournir lesdites possibilités d'échange de données pour lesdits services, à un dispositif de commutation, suite à une demande pertinente correspondante.

10. Dispositif selon la revendication 9, dans lequel le dispositif est configuré de manière à utiliser le protocole Internet pour des interactions.

11. Système de courtier de services, comprenant :
un moyen configuré de manière à recevoir des informations connexes à un environnement d'exploitation en cours d'au moins un noeud de réseau, lorsque ledit au moins un noeud de réseau est rattaché à, ou détaché d'un système de communication ;
un moyen configuré de manière à définir des possibilités d'échange de données dudit au moins un noeud de réseau pour des services, sur la base desdites informations ; et
un moyen configuré de manière à fournir lesdites possibilités d'échange de données pour lesdits services, à un dispositif de commutation, suite à une demande pertinente correspondante.

12. Dispositif comprenant :
un moyen configuré de manière à fournir une fonctionnalité de commutation (MSC) ;
un moyen configuré de manière à établir une connexion de communications au sein et à travers des réseaux dans un système de communication ;
un moyen configuré de manière à récupérer des informations permettant un accès optimisé à des services ; et
un moyen configuré de manière à établir des branches quelconques d'une connexion de communication, dans lequel
toutes les branches de ladite connexion de communication peuvent être configurées différemment selon lesdites informations récupérées.

13. Dispositif selon la revendication 12, comprenant en outre un dispositif selon la revendication 9 ou 10.

14. Réseau de communication présentant des terminaux, et comprenant :
au moins un dispositif (MSC) selon la revendication 12 ou 13;
un dispositif (SBD) selon la revendication 9 ou 10 ; et
au moins un dispositif de services d'accès (ASD1 - ASD3).

15. Réseau de communication présentant des terminaux, et comprenant :
au moins un dispositif (MSC) selon la revendication 12 ou 13 ;
un système de courtier de services selon la revendication 11 ; et
au moins un dispositif de services d'accès.

16. Système de communication comprenant :
une pluralité de réseaux de communication (AN1, AN2, NX), dans lequel un certain terminal (MPT) est configuré de manière à être rattaché à au moins un réseau de communication (AN1), et tout réseau de ladite pluralité de réseaux de communication (AN1, AN2, NX) est configuré de manière à présenter une connexion de communication avec l'un quelconque desdits réseaux de communication, et les dispositifs de services d'accès (ASD1-ASD5) sont configurés de manière à servir pour ladite connexion de communication ; et
un dispositif (SBD) selon la revendication 9 ou 10.

17. Système de communication comprenant :
une pluralité de réseaux de communication (AN1, AN2, NX), dans lequel un certain terminal (MPT) est configuré de manière à être rattaché à au moins un réseau de communication (AN1), et tout réseau de ladite pluralité de réseau de communication (AN1, AN2, NX) est configuré de manière à présenter une connexion de communication avec l'un quelconque desdits réseau de communication, et des dispositifs de services d'accès (ASD1 - ASD5) sont disponibles pour ladite connexion de communications ; et
un système de courtier de services (SBD) selon la revendication 11.
